# FASCICULE DE BREVET EUROPEEN

(11) **EP 3 879 133 B1**
(45) Date de publication et mention de la délivrance du brevet: **03.05.2023**
(21) Numéro de dépôt: 21162134.7
(22) Date de dépôt: 11.03.2021
(51) Int. Cl.: F16D 25/10, F16D 25/0638, F16D 25/12, B60K 6/387, B60K 6/48

(54) **DOUBLE EMBRAYAGE HUMIDE**
DOPPELNASSKUPPLUNG
WET DUAL CLUTCH

(30) Priorité: 12.03.2020 FR 2002477
(43) Date de publication de la demande: 15.09.2021
(73) Titulaire: VALEO EMBRAYAGES, 80009 Amiens (FR)
(72) Inventeur: VUAROQUEAUX, Guillaume, 95892 CERGY PONTOISE (FR); ARHAB, Rabah, 95892 CERGY PONTOISE (FR); DOLE, Arnaud, 95892 CERGY PONTOISE (FR); BOUGARD, Jean-François, 95892 CERGY PONTOISE (FR); CAUMARTIN, Laurent, 95892 CERGY PONTOISE (FR); LEBEAU, Fabien, 95892 CERGY PONTOISE (FR); DOREMUS, Olivier, 95892 CERGY PONTOISE (FR)
(74) Mandataire: Valeo Powertrain Systems

(56) Documents cités:
- EP-A1- 1 750 963
- EP-B1- 1 750 963
- WO-A1-2021/099070
- CN-B- 109 322 940
- DE-A1-102020 105 901
- FR-A1- 2 814 121
- RU-C1- 2 670 340

## Description

La présente invention concerne un double embrayage humide pour une transmission de véhicule automobile de type hybride dans lequel une machine électrique tournante est disposée dans la chaine de transmission de couple.

La présente invention se rapporte notamment au domaine des chaines de transmission de couple pour véhicules automobiles, notamment disposée entre un moteurthermique et une boîte de vitesses dans lequel une machine électrique tournante est disposée en parallèle à l'axe principal de la transmission.

Dans l'état de la technique, il est connu des véhicules automobiles de type hybride comprenant un mécanisme de type double embrayage humide disposé entre un moteur à combustion interne et une boîte de vitesses, accouplé à une machine électrique tournante. Selon ce type de chaine de transmission de couple, il est possible de couper le moteur à combustion interne à chaque arrêt du véhicule et de le redémarrergrâce à la machine électrique tournante. La machine électrique tournante peut également constituer un frein électrique ou apporter un surplus d'énergie au moteurà combustion interne pour l'assister ou éviter que celui-ci ne cale. Lorsque le moteur à combustion interne est en fonctionnement, la machine électrique peut jouer le rôle d'un alternateur.

Une telle machine électrique tournante peut être disposée en ligne avec le double embrayage humide, c'est-à-dire que l'axe de rotation du rotor de la machine électrique tournante est confondu avec l'axe de rotation des embrayages comme décrit dans le document DE102012006730 A1. Dans cette architecture, le rotorde la machine électrique tournante est fixé directement sur le porte-disques d'entrée de couple du double embrayage humide ce qui augmente fortement l'encombrement radial. D'autres exemples sont divulgués dans les documents: FR2871111, EP1750963 et EP4062081 (Article 54(3) CBE).

Dans les développements actuels d'hybridation (« hybridisation » en anglais) des véhicules automobiles, il est demandé de disposer de chaîne de transmission de couple intégrant une source d'énergie électrique sans toutefois que cela n'impacte la compacité axiale et radiale de ladite chaîne de transmission de couple. Du fait de la présence d'embrayage de type humide, il a fallu concevoir un double embrayage humide permettant d'alimenter en fluide les différents embrayages sans modifier l'encombrement de la chaine de transmission de couple. Cette recherche de compacité axiale et radiale est à la base de l'invention.

L'invention vise à améliorer la conception existante en bénéficiant d'un double embrayage humide permettant de concilier les exigences de compacité axiale et radiale tout en garantissant une bonne alimentation des embrayages et de leurs pistons d'actionnement en fluide.

Dans ce but, l'invention propose, selon l'un de ses aspects, un double embrayage humide pour système de transmission de couple comprenant :
un premier embrayage et un deuxième embrayage respectivement de type multidisques,
commandés pour accoupler sélectivement un moteur thermique et une machine électrique tournante à un premier arbre mené et à un deuxième arbre mené, les premier et deuxième embrayages étant disposés radialement l'un au-dessus de l'autre autour d'un axe de rotation,
les deux embrayages comprenant un porte-disques d'entrée de couple lié cinématiquement avec le moteur thermique et un moyeu central d'alimentation d'huile pour le premier embrayage et le deuxième embrayage,
ledit moyeu central comportant :
   - une portion cylindrique,
   - un flasque s'étendant radialement depuis la portion cylindrique,
   - au moins un canal d'alimentation d'huile traversant la portion cylindrique et le flasque, et débouchant au sein de l'un des premier et deuxième embrayages,
le double embrayage humide étant remarquable en ce qu'il comprend un couvercle d'entrainement lié cinématiquement avec la machine électrique tournante, le couvercle d'entrainement étant rapporté sur la périphérie du flasque du moyeu central de manière à venir boucher l'extrémité radiale de l'au moins un canal d'alimentation d'huile, et en ce que le couvercle d'entrainement est emmanché en force sur le flasque du moyeu central.

Un tel double embrayage humide présente l'avantage, grâce à la disposition du couvercle d'entrainement sur la périphérie du flasque, de réduire l'encombrement radial tout en facilitant l'acheminement du fluide au sein des embrayages humides. L'étanchéité des canaux d'alimentation d'huile est réalisée par recouvrement des ouvertures à l'aide d'un composant initialement prévu pourtransmettre le couple. On réduit ainsi le nombre de composants nécessaire à la réalisation du double embrayage humide.

De préférence, le moyeu central peut comprendre une première cavité annulaire disposée sur le côté du flasque et agencée pour recevoir un piston d'actionnement du premier embrayage et une deuxième cavité annulaire agencée pour recevoir un piston d'actionnement du deuxième embrayage, ledit au moins canal d'alimentation d'huile débouchant dans l'une des cavités annulaires des embrayages. Grâce à cette architecture de double embrayage humide, les cavités annulaires forment les chambres de commande des embrayages. Les chambres de commandes sont concentriques et disposées radialement dans un même plan, ce qui facilite l'implantation des embrayages humides au sein de la chaine de transmission de couple.

Avantageusement, les canaux d'alimentation d'huile pour la première cavité et la deuxième cavité peuvent être agencés selon un même plan passant au travers du flasque. De cette manière, on facilite leurs intégrations au sein du double embrayage humide et leurs réalisations. L'encombrement axial d'un tel double embrayage humide est ainsi réduit.

De préférence, le couvercle d'entrainement peut comprendre une portée cylindrique intérieure pour l'appui d'un joint d'étanchéité de piston d'actionnement, la portée cylindrique formant en partie la première cavité annulaire. Ce double embrayage humide, selon l'invention, présente l'avantage, grâce à l'emploi d'un couvercle d'entrainement rapporté, de forme annulaire, de réduire les coûts de fabrication. Cette pièce annulaire rapportée permet de former en partie la cavité annulaire à moindre cout.

Avantageusement, le couvercle d'entrainement peut comprendre une denture externe liée cinématiquement avec la machine électrique tournante. La machine électrique tournante peut ainsi être excentrée par rapport à l'axe de rotation de la chaine de transmission.

La denture externe peut présenter un profil hélicoïdal de forme complémentaire au pignon de la machine électrique tournante.

De manière alternative, la denture peut présenter un profil droit de forme complémentaire à une chaine ou une courroie utilisée pour relierla machine électrique tournante.

Avantageusement, le couvercle d'entrainement peut entourer le pourtourextérieur du flasque. Il est ainsi possible de disposer les cavités annulaires associées auxdeux embrayages radialementdans un même plan.

De préférence, les canaux d'alimentation d'huile peuvent déboucher sur le pourtour extérieur du flasque et peuvent être refermés par la portée cylindrique intérieure du couvercle d'entrainement. De cette manière, il est possible de rendre étanche une partie des canaux d'alimentation d'huile sans utiliser d'autres composants onéreux

De préférence, le premier embrayage peut être actionné à l'aide d'un premier piston d'actionnement, mobile axialement par rapport à la première cavité annulaire du moyeu central entre une position embrayée et une position débrayée du premier embrayage, le premier piston d'actionnement étant commandé en déplacement au moyen d'une chambre de commande délimitée en partie par le couvercle d'entrainement. De cette manière, la chambre de commande du premier embrayage est disposée au plus près du moyeu central d'alimentation d'huile réduisant ainsi les fuites au sein du double embrayage humide.

De préférence, le deuxième embrayage peut être actionné à l'aide d'un deuxième piston d'actionnement, mobile axialement par rapport à la deuxième cavité annulaire du moyeu central entre une position embrayée et une position débrayée du deuxième embrayage, le deuxième piston d'actionnement étant commandé en déplacement au moyen d'une chambre de commande délimitée en partie par la portion cylindrique du moyeu central. De cette manière, la chambre de commande du deuxième embrayage est disposée au plus près du moyeu central d'alimentation d'huile réduisant ainsi les fuites au sein du double embrayage humide.

De préférence, le canal d'alimentation d'huile peut être réalisé par perçage de conduites successives au sein du moyeu central, lesdites conduites étant débouchantes les unes dans les autres et agencées pour alimenter en fluide sous pression la chambre de commande des embrayages. Le fluide peut être de l'huile, par exemple de l'huile de boîte de vitesses.

L'invention peut présenter l'une ou l'autre des caractéristiques décrites ci-dessous combinées entre elles ou prises indépendamment les unes des autres :
- le couvercle d'entrainement peut être soudé sur le flasque du moyeu central.
- le couvercle d'entrainement et le porte-disques d'entrée de couple du premier embrayage peuvent être liés solidairement en rotation, parexemple par l'intermédiaire d'une liaison soudée.
- la première cavité et la deuxième cavité peuvent être imbriquées radialement l'une au-dessus de l'autre.
- l'ensemble multidisques du deuxième embrayage peut être disposé radialement entre la première cavité et la deuxième cavité. De cette manière, il est possible d'exploiter l'espace intérieur disponible au sein du double embrayage humide et ainsi réduire l'encombrement axial.
- le porte-disques d'entrée de couple du deuxième embrayage et le moyeu central peuvent être liés solidairement en rotation, par exemple par l'intermédiaire d'une liaison soudée.
- l'ensemble multidisques du premier embrayage peut être actionné par un premier piston d'actionnement réalisé par emboutissage d'une tôle d'acier.
- le premier piston d'actionnement et un couvercle d'équilibrage du premier embrayage peuvent former conjointement la chambre d'équilibrage du premier embrayage, un élément de rappel élastique étant disposé axialement entre le premier piston d'actionnement et le couvercle d'équilibrage.
- l'extrémité libre du piston d'actionnement du deuxième embrayage en appui sur l'ensemble multidisques peut être disposée radialement entre la première cavité et la deuxième cavité.
- la première cavité et la deuxième cavité peuvent être orientées en direction de l'arbre menant.
- les canaux d'alimentation d'huile pour la première cavité et la deuxième cavité peuvent être agencés selon un même plan passant au travers du flasque.
- une première chambre d'équilibrage du premier embrayage est disposée axialement à coté de la première cavité et une deuxième chambre d'équilibrage du deuxième embrayage est disposée axialement à coté de la deuxième cavité, la première chambre d'équilibrage pouvant être alimentée en fluide de refroidissement par au moins un canal d'alimentation d'huile traversant la portion cylindrique et le flasque.
- le canal d'alimentation d'huile de la chambre d'équilibrage peut être réalisé par perçage de conduites successives au sein du moyeu central, lesdites conduites étant débouchantes les unes dans les autres et agencées pour alimenter en fluide de refroidissement la chambre d'équilibrage du premier embrayage.
- les canaux d'alimentation d'huile de la première cavité, de la deuxième cavité et de la première chambre d'équilibrage peuvent être répartis angulairement autour de l'axe de rotation et traverser radialement le flasque.
- les canaux d'alimentation d'huile pour la première cavité, la deuxième cavité et la première chambre d'équilibrage peuvent être agencés selon un même plan perpendiculaire à l'axe X passant au travers du flasque.
- le couvercle d'entrainement peut obturer les canaux d'alimentation d'huile traversant radialement le flasque du moyeu central.
- la portion cylindrique du moyeu central peut s'étendre axialement dans une direction opposée à l'arbre menant, la portion cylindrique comprenant les canaux d'alimentation d'huile de la première cavité, de la deuxième cavité et des chambres d'équilibrage.
- une pièce annulaire peut être rapportée sur le flasque du moyeu central et comprendre au moins une portée cylindrique intérieure ou extérieure pour l'appui d'un joint d'étanchéité de piston d'actionnement.
- la pièce annulaire rapportée peutformer en partie la cavité annulaire de l'un des premier ou deuxième embrayages. Un tel moyeu central présente l'avantage, grâce à l'emploi d'une pièce annulaire rapportée de réduire les coûts de fabrication. Cette pièce annulaire rapportée permet de former des cavités annulaires à moindre cout, comparativement à une opération d'usinage, étant donné que celle-ci peut être formée par exemple par emboutissage.
- la pièce annulaire rapportée peut être fixée par soudage sur le flasque du moyeu central, par exemple par soudage laser par transparence, le cordon de soudure étant disposé radialement au-dessus ou en dessous de l'orifice de sortie du canal d'alimentation d'huile débouchant dans la cavité annulaire.
- la pièce annulaire rapportée peut être fixée par rivetage sur le flasque du moyeu central.
- la pièce annulaire rapportée peut être un porte-disques d'entrée du premier embrayage ou du deuxième embrayage, l'extrémité libre de la pièce annulaire rapportée comportant une cannelure et l'autre extrémité étant fixée sur le flasque du moyeu central.
- les pistons d'actionnement sont annulaires et peuvent comprendre des joints toriques rapportés.
- les pistons d'actionnement sont annulaires et peuvent comprendre des joints d'étanchéité surmoulés.

Selon un autre aspect de l'invention, le couvercle d'entrainement comprend une couronne dentée, décalée axialement par rapport au flasque du moyeu central, apte à être lié cinématiquement en rotation avec une machine électrique tournante autour d'un axe parallèle à l'axe de rotation X Cette disposition permet de positionner la machine électrique tournante en fonction de l'espace disponible dans la chaine de transmission de couple du véhicule.

Selon l'invention, les embrayages, à savoir le premier embrayage et le deuxième embrayage sont de type multidisques. Dans le cadre de l'invention, un ensemble multidisques est un ensemble comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, les embrayages décrivant une position débrayée et une position embrayée dans laquelle lesdits plateaux et le disque de friction pincent les garnitures de friction de manière à transmettre un couple entre un porte-disque d'entrée et un porte-disque de sortie.

Au sens de la présente demande, un embrayage humide est un embrayage qui est adapté pour fonctionner dans un bain d'huile.

Suivant un autre aspect de l'invention, celle-ci a trait à un triple embrayage humide comprenant un double embrayage humide reprenant tout ou partie des caractéristiques décrites précédemment et un embrayage de coupure de couple disposé radialement au-delà du double embrayage humide, le moyeu central du double embrayage humide peut comporter au moins un canal d'alimentation d'huile débouchant au sein de l'embrayage de coupure de couple en traversant la portion cylindrique et le flasque, et le couvercle d'entrainement rapporté sur la périphérie du flasque du moyeu central peut boucher l'extrémité radiale de l'au moins un canal d'alimentation d'huile alimentant l'embrayage de coupure de couple.

Cette architecture de triple embrayage humide est compacte axialement. L'étanchéité des canaux d'alimentation d'huile est réalisée par recouvrement des ouvertures à l'aide d'un composant initialement prévu pour transmettre le couple. On réduit ainsi le nombre de composants nécessaire à la réalisation du triple embrayage humide.

De préférence, l'au moins un canal d'alimentation d'huile alimentant en huile la chambre de commande du premier embrayage peut être bouché par un bouchon de fermeture additionnel, par exemple une bille, un rivet ou une vis. De cette manière, on sécurise à moindre coût l'étanchéité du circuit d'alimentation d'huile du premier embrayage.

Avantageusement, les canaux d'alimentation d'huile de l'embrayage de coupure de couple peuvent être répartisangulairementautourde l'axe de rotation Xet traverser radialement le flasque.

Avantageusement, les canaux d'alimentation d'huile de l'embrayage de coupure de couple peuvent être agencés selon un même plan perpendiculaire à l'axe X passant au travers du flasque.

L'invention sera mieux comprise, et d'autres buts, détails, caractéristiques et avantages de celle-ci apparaîtront plus clairement au cours de la description suivante d'un mode de réalisation particulierde l'invention, donné uniquement à titre illustratif et non limitatif, en référence auxfigures annexées.
- la [Figure 1] représente une vue en coupe axiale d'un double embrayage humide selon un premier mode de réalisation de l'invention.
- la [Figure 2] représente une autre vue en coupe axiale du double embrayage humide selon le premier mode de réalisation de l'invention.
- la [Figure 3] représente une vue en coupe axiale d'un triple embrayage humide comprenant le double embrayage humide selon l'invention.

Dans la suite de la description et des revendications, on utilisera à titre non limitatif et afin d'en faciliter la compréhension, les termes " avant " ou " arrière " selon la direction par rapport à une orientation axiale déterminée par l'axe X principal de rotation de la transmission du véhicule automobile et les termes " intérieur/ interne " ou " extérieur/ externe " par rapport à l'axe X et suivant une orientation radiale, orthogonale à ladite orientation axiale.

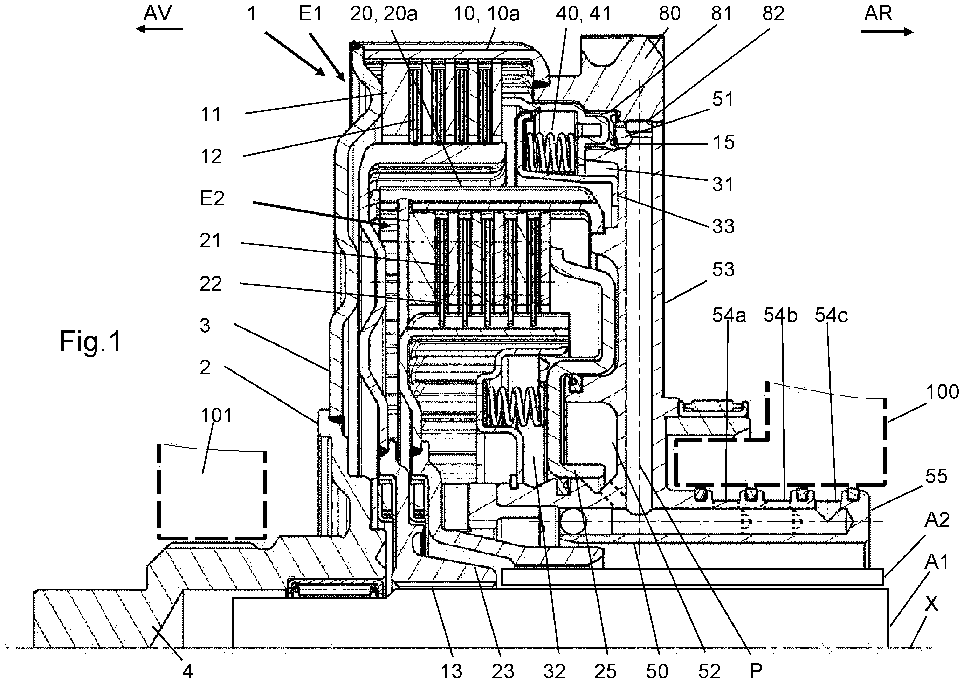

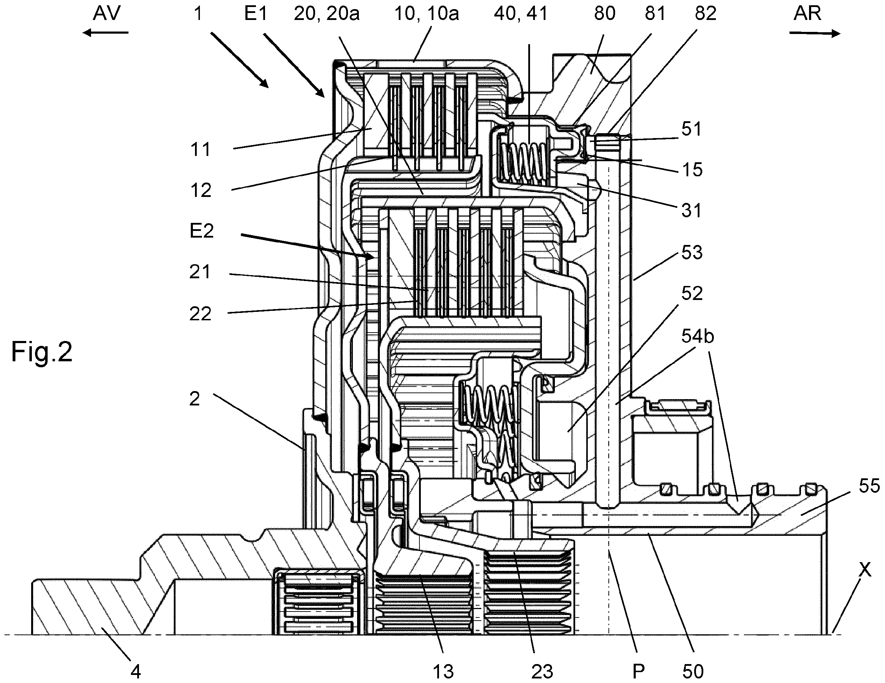

On a représenté sur les figures 1 et 2 un premier mode de réalisation d'un moyeu central 50 d'alimentation d'huile pour double embrayage humide 1. Le double embrayage humide 1 est représenté au sein d'une chaine de transmission de couple de véhicule automobile par l'intermédiaire d'un carter de boite de vitesses 100 équipé de deux arbres A1, A2 menés de sortie de couple.

En relation avec les figures 1 et 2, on observe un double embrayage humide 1 comprenant un premier embrayage E1 et un deuxième embrayage E2 respectivement de type multidisques, commandés pour accoupler sélectivement un moteurthermique et une machine électrique tournante à un premier arbre mené et à un deuxième arbre mené. Les premier et deuxième embrayages E1, E2 sont disposés radialement l'un au-dessus de l'autre autour d'un axe de rotation X

Les deux embrayages E1, E2 comprennent des porte-disques 10, 20 d'entrée de couple lié cinématiquement avec le moteur thermique et un moyeu central 50 d'alimentation d'huile pour le premier embrayage E1 et le deuxième embrayage E2,

Le moyeu central 50 d'alimentation d'huile comprend :
- une portion cylindrique 55 d'axe X,
- un flasque 53 s'étendant radialement depuis la portion cylindrique 55,
- une première cavité 51 annulaire disposée sur le côté du flasque et agencée pour recevoir un piston d'actionnement du premier embrayage E1,
- une deuxième cavité 52 annulaire disposée sur le même côté du flasque que la première cavité annulaire et agencée pour recevoir un piston d'actionnement du deuxième embrayage E2,
- des canaux d'alimentation d'huile 54a, 54b et 54c traversant la portion cylindrique 55 et le flasque 53, et débouchant dans les cavités annulaires.

Les cavités 51, 52 annulaires du premier embrayage E1 et du deuxième embrayage E2 sont orientées dans une même direction, dans cet exemple en direction de l'arbre menant, c'est-à-dire en direction du moteur thermique de la chaine de transmission de couple.

Le moyeu central 50 d'alimentation d'huile est apte à transmettre le couple en provenance de deux sources distinctes, thermique et électrique. Le couple issu du moteur thermique et du moteur électrique peut alors être transmis auxarbres coaxiaux A1, A2 de boite de vitesses en fonction de la fermeture de l'un ou de l'autre du premier embrayage E1 ou du deuxième embrayage E2.

Le premier arbre A1 mené est entraîné en rotation lorsque ledit premier embrayage E1 est fermé et le deuxième A2 arbre mené est entraîné en rotation lorsque ledit deuxième embrayage E2 est fermé.

Le double embrayage humide 1 comporte autourde son axe de rotation Xau moins un élément d'entrée 2 de couple qui est lié en rotation à un arbre menant (non représenté). L'élément d'entrée 2 est situé à l'avant du double embrayage humide 1.

Dans le premier mode de réalisation, l'élément d'entrée 2 présentant globalement une forme en « L », comporte une partie d'orientation radiale formée par un voile 3 d'entrée de couple et une partie d'orientation axiale formée par un moyeu 4 d'entrée de couple. Le voile 3 et le moyeu 4 sont solidaires, de préférence fixées ensemble par soudage. Le moyeu 4 d'entrée de couple est guidé en rotation à l'intérieur d'un boitier 101 fixe par rapport à la chaine de transmission de couple.

Le moyeu 4 d'entrée de couple est par exemple lié en rotation par l'intermédiaire de cannelures formées à la sortie d'un dispositif d'amortissement (tel qu'un double volant amortisseur, etc.) dont l'entrée est liée, par l'intermédiaire notamment d'un volant moteur, à l'arbre menant formé par un vilebrequin qu'entraîne en rotation un moteur thermique équipant le véhicule automobile.

Le voile 3 d'entrée de couple est lié en rotation avec un porte-disques 10 d'entrée de couple agencée pour recevoir l'ensemble multidisques du premierembrayage E1. La liaison en rotation est ici réalisée par soudure mais pourrait être réalisée par emboitement de cannelures.

L'ensemble multidisques du premier embrayage E1 comporte des plateaux 11 liés en rotation à un porte-disques 10 rapporté sur le moyeu central 50 d'alimentation d'huile par l'intermédiaire d'un couvercle d'entrainement 80 et des disques 12 de friction liés en rotation à un porte-disques de sortie 13. Les disques 12 de friction sont, unitairement, axialement interposés entre deux plateaux 11 successifs.

Dans le cas présent, le porte-disques 10 comporte une cannelure interne 10a qui engrène avec l'ensemble multidisques du premier embrayage E1, le porte-disques 10 étant fixé solidement au moyeu central 50 par l'intermédiaire d'un cordon de soudure.

Le porte-disques de sortie 13 du premier embrayage E1 est lié en rotation par engrènement avec les disques 12 de friction et par une liaison cannelée avec ledit premier arbre A1 mené. Le porte-disques de sortie 13 présente globalement une forme en « L » dont l'extrémité radiale intérieure est solidarisée à un moyeu de sortie cannelé.

L'ensemble multidisques du deuxième embrayage E2 comporte des plateaux21 liés en rotation à un porte-disques 20 rapporté sur le moyeu central 50 d'alimentation d'huile et des disques 22 de friction liés en rotation à un porte-disques de sortie 23.

Dans le cas présent, le porte-disques 20 comporte une cannelure interne 20a qui engrène avec l'ensemble multidisques du deuxième embrayage E2, le porte-disques20 étant fixé solidement au moyeu central 50 par l'intermédiaire d'un cordon de soudure.

Le porte-disques de sortie 23 du deuxième embrayage E2 est lié en rotation par engrènement avec les disques 22 de friction et par une liaison cannelée avec ledit deuxième arbre A2 mené. Le porte-disques de sortie 23 présente globalement une forme en « L » dont l'extrémité radiale intérieure est solidarisée à un moyeu de sortie cannelé.

Le couvercle d'entrainement 80 est rapporté sur le pourtour extérieur du flasque 53 du moyeu central 50. Le moyeu central 50 a pour fonction de transmettre le couple au sein du double embrayage humide 1. Pour cela, le couvercle d'entrainement 80 est solidaire en rotation avec le moyeu central 50, dans le cas présent par l'intermédiaire d'un emmanchement en force.

Le couvercle d'entrainement 80 comprend une denture externe liée cinématiquement avec la machine électrique tournante, ladite denture étant issue de matière avec le couvercle d'entrainement ou rapportée sur le couvercle d'entrainement. La denture externe présente un profil hélicoïdal de forme complémentaire au pignon de la machine électrique tournante. Alternativement, la denture pourrait présenter un profil droit de forme complémentaire à une chaine ou une courroie utilisée pour relier la machine électrique tournante.

Le double embrayage humide 1 est commandé hydrauliquement par l'intermédiaire d'un fluide sous pression, généralement de l'huile.

Pour commander sélectivement le changement d'état du premierembrayage E1 et du deuxième embrayage E2, un dispositif de commande du double embrayage humide gère l'alimentation en huile sous pression au sein de chambres de commande séparées. Le dispositif de commande est généralement intégré au carter de boite de vitesses 100. Le dispositif de commande est raccordé au moyeu central 50 d'alimentation d'huile qui comporte des canaux54a et 54c d'alimentation d'huile sous pression tel que représentés sur la figure 1.

Comme cela est connu dans le fonctionnement d'un embrayage humide, une chambre d'équilibrage est associée à chaque chambre de commande. Généralement, la chambre d'équilibrage est disposée axialement à côté de la cavité annulaire faisant office de chambre de commande. Les chambres d'équilibrages sont alimentées en fluide de refroidissement. Le fluide de refroidissement emprunte un canal d'alimentation d'huile 54b distincts des autres canaux d'alimentation d'huile 54a et 54c. Ce canal d'alimentation d'huile 54b est égalementformé dans le moyeu central 50 d'alimentation d'huile.

Les canaux d'alimentation d'huile 54a, 54b et 54c sont répartis angulairement autour de la portion cylindrique 55. Chacun des canaux54a, 54b et 54c d'alimentation d'huile sont constitués de perçages sensiblement radiaux et axiaux dirigés en direction des chambres de commande des premier et deuxième embrayages E1, E2, mais aussi en direction des chambres d'équilibrage 31, 32 des premier et deuxième embrayages E1, E2.

Par exemple, le canal d'alimentation d'huile 54c situé axialement à l'extrémité arrière du moyeu central 50 est associé à la chambre de commande du premier embrayage E1. Le canal d'alimentation d'huile 54c est réalisé par perçage de conduites successives axiales et radiales au sein du moyeu central 50. Les conduites sont débouchantes les unes dans les autres et agencées pour alimenteren fluide sous pression la chambre de commande du premier embrayage E1. Le canal d'alimentation d'huile 54c débouche dans la première cavité 51 annulaire formée en partie par une extension axiale issue directement du flasque 53 et en partie par le couvercle d'entrainement 80.

Notamment, le couvercle d'entrainement 80 comprend une portée cylindrique 81 intérieure pour l'appui d'un joint d'étanchéité du piston d'actionnement 15 du premier embrayage E1, la portée cylindrique 81 formant en partie la première cavité 51 annulaire.

Le piston d'actionnement 15 du premier embrayage E1 est mobile axialement, ici de l'arrière vers l'avant, entre une position débrayée et une position embrayée qui correspondent respectivement auxétats ouvert et fermé du premier embrayage E1. Le piston d'actionnement 15 est commandé en déplacement au moyen d'une chambre de commande délimitée par la première cavité 51.

L'ensemble multidisques du premier embrayage E1 est actionné directement parle premier piston d'actionnement 15.

Le deuxième embrayage E2 comporte un piston d'actionnement 25 qui est mobile axialement, ici de l'arrière vers l'avant, entre une position débrayée et une position embrayée qui correspondent respectivement aux états ouvert et fermé du deuxième embrayage E2. L'ensemble multidisques du deuxième embrayage E2 est actionné directement par le deuxième piston d'actionnement 25 réalisée à partir d'une tôle emboutie. Le piston d'actionnement 25 est mobile axialement par rapport à la deuxième cavité 52 annulaire du moyeu central 50. Le piston d'actionnement 25 est commandé en déplacement au moyen d'une chambre de commande délimitée par la deuxième cavité 52.

Le canal d'alimentation d'huile 54a usiné dans le moyeu central 50 est associé à la chambre de commande du deuxième embrayage E2. Le canal d'alimentation d'huile 54a est réalisé par perçage de conduites successives axiales et radiales au sein du moyeu central 50. Les conduites sont débouchantes les unes dans les autres et agencées pour alimenter en fluide sous pression la chambre de commande du deuxième embrayage E2. Le canal d'alimentation d'huile 54b débouche dans la deuxième cavité 52 annulaire formée directement dans le moyeu central 50.

La figure 2 illustre le canal d'alimentation d'huile 54b usiné dans le moyeu central 50 et associé à la chambre d'équilibrage du premier embrayage E1. Ce canal d'alimentation d'huile 54b est, dans cet exemple, commun avec le canal d'alimentation d'huile de la chambre d'équilibrage 31 du deuxième embrayage E2. Le canal d'alimentation d'huile 54b est réalisé par perçage de conduites successives axiales et radiales au sein du moyeu central 50. Pour la première chambre d'équilibrage, le canal 54b débouche dans une enceinte close formée en partie par un couvercle d'équilibrage 33 du premier embrayage E1.

Plus précisément, le premier piston d'actionnement 15 et le couvercle d'équilibrage 33 du premier embrayage E1 forment conjointement la chambre d'équilibrage 31 du premier embrayage, l'élément de rappel élastique 40 est disposé axialement entre le premier piston d'actionnement et le couvercle d'équilibrage. Le couvercle d'équilibrage 33 est fixé directement sur le flasque 53 du moyeu central 50.

Comme illustré sur la figure 1, l'élément de rappel élastique 40 du piston d'actionnement 15 comprend une pluralité de ressorts hélicoïdaux41 intercalés axialement entre une paroi avant du piston d'actionnement 15 et une surface annulaire de la chambre d'équilibrage. L'élément de rappel élastique 40 a pour fonction de rappeler automatiquement le piston d'actionnement 15 en position débrayée, correspondant à un état ouvert de l'embrayage. Le piston d'actionnement 15 est annulaire et comprend un joint d'étanchéité surmoulé.

A partir des figures 1 et 2, on comprend que tous les canaux d'alimentation d'huile 54a, 54b, et 54c sont agencés selon un même plan P perpendiculaire à l'axe X passant au travers du flasque 53. Les canaux d'alimentation d'huile 54a, 54b, et 54c débouchent radialement sur le pourtour extérieur du flasque 53 et sont refermés par un alésage intérieur 82 du couvercle d'entrainement, distinct de la portée cylindrique intérieure 81. Le couvercle d'entrainement 80 entoure le pourtour extérieur du flasque 53. Dans un autre cas possible, les canaux d'alimentation d'huile peuvent être refermés par la portée cylindrique intérieure du couvercle d'entrainement.

Dans une variante non représentée, afin de faciliter la réalisation du moyeu central 50, une pièce annulaire peut être rapportée sur le flasque 53 du moyeu central et comprendre au moins une portée cylindrique intérieure ou extérieure pour l'appui d'un joint d'étanchéité d'un des pistons d'actionnement du premier embrayage E1 ou du deuxième embrayage E2. Ainsi, la pièce annulaire rapportée peut former en partie la cavité annulaire de l'un des premier ou deuxième embrayages. La pièce annulaire rapportée peut être fixée par soudage sur le flasque du moyeu central, par exemple par soudage laser par transparence.

Dans une autre variante non représentée, le couvercle d'entrainement 80 peut comprendre une couronne dentée décalée axialement par rapport au flasque 53 du moyeu central 50. Cette couronne dentée est toujours liée cinématiquement en rotation avec la machine électrique tournante autour d'un axe parallèle à l'axe de rotation X Dans cette variante, la couronne dentée peut être rapportée sur le couvercle d'entrainement. Ainsi la couronne dentée est décalée axialement par rapport au premier embrayage E1 et au deuxième embrayage E2 de sorte que la compacité radiale du double embrayage humide peut encore être améliorée.

On comprend à la lecture de ce qui précède que la présente invention propose un double embrayage humide dans lequel les embrayages sont concentriques et disposées radialement dans un même plan. L'encombrement axial d'un tel double embrayage humide au sein d'une chaine de transmission de couple est réduit. Ce double embrayage humide comprend un moyeu central d'alimentation d'huile dans lequel le réseau de canaux d'alimentation d'huile est plus simple à concevoiret demande moins de temps à fabriquer.

L'invention ne saurait toutefois se limiter aux moyens et configurations décrits et illustrés ici, et elle s'étend également à tout moyen ou configuration équivalents et à toute combinaison technique opérant de tels moyens. En particulier, la forme du moyeu central d'alimentation d'huile peut être modifiée sans nuire à l'invention, dans la mesure où ces composants, in fine, remplissent les mêmes fonctionnalités que celles décrites dans ce document.

Le double embrayage humide selon l'invention pourrait être associé à un embrayage de coupure de type K0 qui serait dans ce cas disposé en amont de l'élément d'entrée 2 de couple. L'embrayage de coupure K0 permettrait alors de déconnecter le moteur thermique du reste de la chaine de transmission.

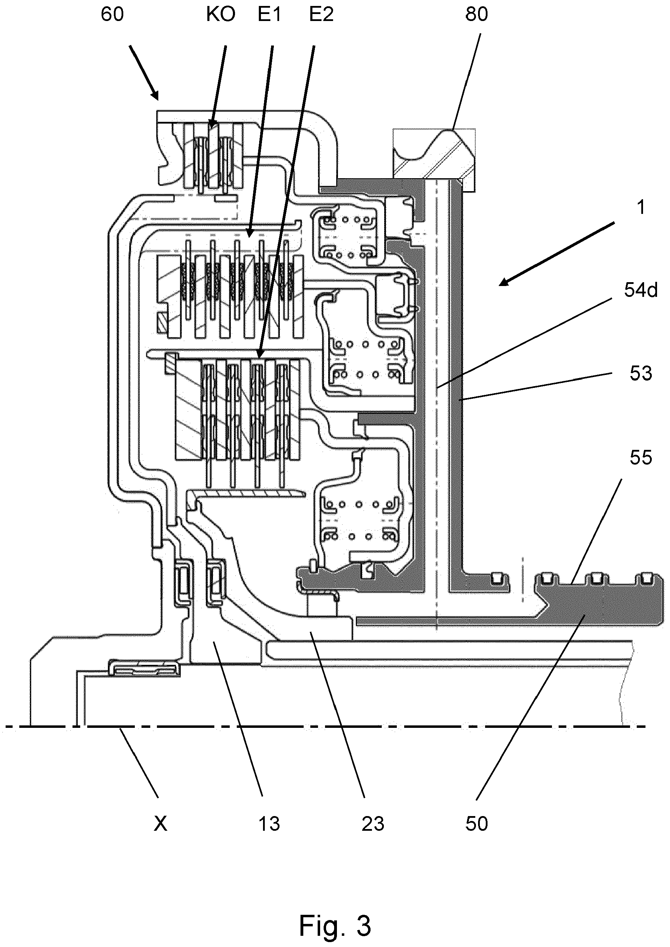

L'invention concerne également selon un autre de ses aspects un triple embrayage humide 60. Selon le mode de réalisation illustré sur la figure 3, le triple embrayage humide 60 comprend le double embrayage humide 1 selon l'invention et un embrayage de coupure de couple de type K0, l'embrayage de coupure de couple K0 étant disposé radialement au-delà du double embrayage humide 1. De cette manière, l'embrayage de coupure de couple K0 et les premier et deuxième embrayages E1, E2 sont concentriques et imbriqués radialement entre eux Cette architecture de triple embrayage humide est compacte axialement.

Selon cet autre aspect de l'invention, le moyeu central 50 du double embrayage humide 1 comporte des canaux d'alimentation d'huile 54d débouchant au sein de l'embrayage de coupure de couple K0 en traversant la portion cylindrique 55 et le flasque 53. Les canaux d'alimentation d'huile 54d de l'embrayage de coupure de couple K0 sont répartis angulairement autour de l'axe de rotation Xet traversent radialement le flasque 53. La répartition angulaire autour de la portion cylindrique 55 est similaire aux canaux d'alimentation d'huile 54a, 54b et 54c des premier et deuxième embrayages E1, E2.

Les canaux d'alimentation d'huile 54d de l'embrayage de coupure de couple k0 sont agencés selon un même plan perpendiculaire à l'axe X passant au travers du flasque 53.

Comme illustré sur la figure3, le triple embrayage humide 60 comporte un couvercle d'entrainement 80 rapporté sur la périphérie du flasque 53 du moyeu central 50 qui bouche l'extrémité radiale des canaux d'alimentation d'huile 54d alimentant l'embrayage de coupure de couple K0. L'étanchéité des canaux d'alimentation d'huile est réalisée par recouvrement des ouvertures à l'aide du couvercle d'entrainement 80 initialement prévu pour transmettre le couple en provenance de la machine électrique tournante. On réduit ainsi le nombre de composants nécessaire à la réalisation du triple embrayage humide.

En complément, au moins un canal d'alimentation d'huile 54c alimentant en huile la chambre de commande du premier embrayage E1 peut être bouché par un bouchon de fermeture additionnel, par exemple une bille, un rivet ou une vis. Le bouchon de fermeture additionnel est inséré dans le canal s'étendant radialement depuis la périphérie externe du flasque 53. L'insertion du bouchon de fermeture additionnel se fait en direction de l'axe de rotation X du triple embrayage humide 60. Le bouchon de fermeture est inséré selon une direction perpendiculaire à l'axe de rotation X dans le canal d'alimentation d'huile de manière à sécuriser l'étanchéité du circuit d'alimentation d'huile du premier embrayage E1. Tous les canaux d'alimentation d'huile de la chambre de commande du premier embrayage E1 sont ainsi obturés avant emmanchementen force du couvercle d'entrainement 80 sur le flasque 53 du moyeu central 50.

Dans les revendications, tout signe de référence entre parenthèses ne saurait être interprété comme une limitation de revendication.

## Revendications

1. Double embrayage humide (1) pour système de transmission de couple comprenant :
un premier embrayage (E1) et un deuxième embrayage (E2) respectivement de type multidisques, commandés pour accoupler sélectivement un moteur thermique et une machine électrique tournante à un premier arbre mené et à un deuxième arbre mené, les premier et deuxième embrayages (E1, E2) étant disposés radialement l'un au-dessus de l'autre autour d'un axe de rotation (X),
les deux embrayages (E1, E2) comprenant un porte-disques (10, 20) d'entrée de couple lié cinématiquement avec le moteur thermique et un moyeu central (50) d'alimentation d'huile pour le premier embrayage (E1) et le deuxième embrayage (E2),
ledit moyeu central (50) comportant :
- une portion cylindrique (55),
- un flasque (53) s'étendant radialement depuis la portion cylindrique (55),
- au moins un canal d'alimentation d'huile (54a, 54b, 54c) traversant la portion cylindrique (55) et le flasque (53), et débouchant au sein de l'un des premier et deuxième embrayages,
**caractérisé en ce que** le double embrayage humide comprend un couvercle d'entrainement (80) lié cinématiquement avec la machine électrique tournante, le couvercle d'entrainement (80) étant rapporté sur la périphérie du flasque (53) du moyeu central (50) de manière à venir boucher l'extrémité radiale de l'au moins un canal d'alimentation d'huile,
et **en ce que** le couvercle d'entrainement (80) est emmanché en force sur le flasque (53) du moyeu central (50).

2. Double embrayage humide (1) selon la revendication 1, dans lequel le moyeu central (50) comprend une première cavité (51) annulaire disposée sur le côté du flasque (53) et agencée pour recevoir un piston d'actionnement (15) du premier embrayage (E1) et une deuxième cavité (52) annulaire agencée pour recevoir un piston d'actionnement (25) du deuxième embrayage (E2), ledit au moins canal d'alimentation d'huile (54a, 54b, 54c) débouchant dans l'une des cavités (51, 52) annulaires des embrayages.

3. Double embrayage humide (1) selon la revendication 2, dans lequel le couvercle d'entrainement (80) comprend une portée cylindrique (81) intérieure pour l'appui d'un joint d'étanchéité de piston d'actionnement (15) du premier embrayage (E1), la portée cylindrique (81) formant en partie la première cavité (51) annulaire.

4. Double embrayage humide (1) selon l'une des revendications 1 à 3, dans lequel le couvercle d'entrainement (80) comprend une denture externe liée cinématiquement avec la machine électrique tournante.

5. Double embrayage humide (1) selon l'une des revendications 1 à 4, dans lequel le couvercle d'entrainement (80) et le porte-disques (10) d'entrée de couple du premier embrayage (E1) sont liés solidairement en rotation, par exemple par l'intermédiaire d'une liaison soudée.

6. Double embrayage humide (1) selon l'une des revendications 2 à 5, dans lequel la première cavité (51) et la deuxième cavité (52) sont imbriquées radialement l'une au-dessus de l'autre.

7. Double embrayage humide (1) selon la revendication précédente, dans lequel l'ensemble multidisques du deuxième embrayage (E2) est disposé radialement entre la première cavité (51) et la deuxième cavité (52).

8. Double embrayage humide (1) selon l'une des revendications 2 à 7, dans lequel l'extrémité libre du piston d'actionnement (25) du deuxième embrayage (E2) en appui sur l'ensemble multidisques est disposée radialement entre la première cavité (51) et la deuxième cavité (52).

9. Double embrayage humide (1) selon l'une des revendications 2 à 8, dans lequel la première cavité (51) et la deuxième cavité (52) sont orientées en direction de l'arbre menant.

10. Double embrayage humide (1) selon l'une des revendications 2 à 9, comprenant une première chambre d'équilibrage (31) du premier embrayage (E1) associée à la première cavité (51) et une deuxième chambre d'équilibrage (32) du deuxième embrayage (E2) associée la deuxième cavité (52), la première chambre d'équilibrage (31) étant alimentée en fluide de refroidissement par au moins un canal d'alimentation d'huile (54b) traversant la portion cylindrique (55) et le flasque (53).

11. Double embrayage humide (1) selon la revendication précédente, dans lequel les canaux d'alimentation d'huile (54a, 54b, 54c) de la première cavité (51), de la deuxième cavité (52) et de la première chambre d'équilibrage (31) sont répartis angulairement autour de l'axe de rotation (X) et traversent radialement le flasque (53).

12. Double embrayage humide (1) selon l'une des revendications 10 ou 11, dans lequel les canaux d'alimentation d'huile (54a, 54b, 54c) pour la première cavité (51), la deuxième cavité (52) et la première chambre d'équilibrage (31) sont agencés selon un même plan (P) perpendiculaire à l'axe (X) passant au travers du flasque (53).

13. Triple embrayage humide (60) comprenant un double embrayage humide (1) selon l'une des revendications 1 ou 2 et un embrayage de coupure de couple (K0) disposé radialement au-delà du double embrayage humide (1), le moyeu central (50) du double embrayage humide comporte au moins un canal d'alimentation d'huile (54d) débouchant au sein de l'embrayage de coupure de couple (K0) en traversant la portion cylindrique (55) et le flasque (53), et le couvercle d'entrainement (80) rapporté sur la périphérie du flasque (53) du moyeu central (50) bouche l'extrémité radiale de l'au moins un canal d'alimentation d'huile (54d) alimentant l'embrayage de coupure de couple (K0).

14. Triple embrayage humide (60) selon la revendication précédente dans lequel l'au moins un canal d'alimentation d'huile (54c) alimentant en huile une chambre de commande du premier embrayage (E1) est bouché par un bouchon de fermeture additionnel, par exemple une bille, un rivet ou une vis.

## Patentansprüche

1. Nasse Doppelkupplung (1) für ein Drehmomentübertragungssystem, umfassend:
eine erste Kupplung (E1) und eine zweite Kupplung (E2), die jeweils vom Typ Mehrscheibenkupplung sind und gesteuert werden, um einen Verbrennungsmotor und eine rotierende elektrische Maschine wahlweise mit einer ersten angetriebenen Welle und einer zweiten angetriebenen Welle zu koppeln, wobei die erste und die zweite Kupplung (E1, E2) um eine Drehachse (X) herum radial übereinander angeordnet sind,
wobei die beiden Kupplungen (E1, E2) einen Drehmomenteingangsscheibenträger (10, 20), der kinematisch mit dem Verbrennungsmotor verbunden ist, und eine zentrale Nabe (50) zur Ölversorgung für die erste Kupplung (E1) und die zweite Kupplung (E2) umfassen,
wobei die zentrale Nabe (50) Folgendes aufweist:
- einen zylindrischen Abschnitt (55),
- einen Flansch (53), der sich radial vom zylindrischen Abschnitt (55) erstreckt,
- mindestens einen Ölversorgungskanal (54a, 54b, 54c), der durch den zylindrischen Abschnitt (55) und den Flansch (53) verläuft und innerhalb einer der ersten und der zweiten Kupplung mündet,
**dadurch gekennzeichnet, dass** die nasse Doppelkupplung eine Antriebsabdeckung (80) umfasst, die kinematisch mit der rotierenden elektrischen Maschine verbunden ist, wobei die Antriebsabdeckung (80) am Umfang des Flanschs (53) der zentralen Nabe (50) so angebracht ist, dass sie das radiale Ende des mindestens einen Ölversorgungskanals verschließt,
und dass die Antriebsabdeckung (80) auf den Flansch (53) der zentralen Nabe (50) aufgepresst ist.

2. Nasse Doppelkupplung (1) nach Anspruch 1, wobei die zentrale Nabe (50) einen ersten ringförmigen Hohlraum (51) umfasst, der auf der Seite des Flanschs (53) angeordnet und dazu ausgebildet ist, einen Betätigungskolben (15) der ersten Kupplung (E1) aufzunehmen, und einen zweiten ringförmigen Hohlraum (52), der dazu ausgebildet ist, einen Betätigungskolben (25) der zweiten Kupplung (E2) aufzunehmen, wobei der mindestens eine Ölversorgungskanal (54a, 54b, 54c) in einen der ringförmigen Hohlräume (51, 52) der Kupplungen mündet.

3. Nasse Doppelkupplung (1) nach Anspruch 2, wobei die Antriebsabdeckung (80) eine innere zylindrische Auflage (81) zur Anlage einer Dichtung des Betätigungskolbens (15) der ersten Kupplung (E1) umfasst, wobei die zylindrische Auflage (81) teilweise den ersten ringförmigen Hohlraum (51) bildet.

4. Nasse Doppelkupplung (1) nach einem der Ansprüche 1 bis 3, wobei die Antriebsabdeckung (80) eine Außenzahnung aufweist, die kinematisch mit der rotierenden elektrischen Maschine verbunden ist.

5. Nasse Doppelkupplung (1) nach einem der Ansprüche 1 bis 4, wobei die Antriebsabdeckung (80) und der Drehmomenteingangsscheibenträger (10) der ersten Kupplung (E1) drehfest miteinander verbunden sind, beispielsweise über eine Schweißverbindung.

6. Nasse Doppelkupplung (1) nach einem der Ansprüche 2 bis 5, wobei der erste Hohlraum (51) und der zweite Hohlraum (52) radial übereinander verschachtelt sind.

7. Nasse Doppelkupplung (1) nach dem vorangehenden Anspruch, wobei die Mehrscheibenbaugruppe der zweiten Kupplung (E2) radial zwischen dem ersten Hohlraum (51) und dem zweiten Hohlraum (52) angeordnet ist.

8. Nasse Doppelkupplung (1) nach einem der Ansprüche 2 bis 7, wobei das freie Ende des Betätigungskolbens (25) der zweiten Kupplung (E2), das an der Mehrscheibenbaugruppe anliegt, radial zwischen dem ersten Hohlraum (51) und dem zweiten Hohlraum (52) angeordnet ist.

9. Nasse Doppelkupplung (1) nach einem der Ansprüche 2 bis 8, wobei der erste Hohlraum (51) und der zweite Hohlraum (52) in Richtung der Antriebswelle ausgerichtet sind.

10. Nasse Doppelkupplung (1) nach einem der Ansprüche 2 bis 9, umfassend eine erste Ausgleichskammer (31) der ersten Kupplung (E1), die dem ersten Hohlraum (51) zugeordnet ist, und eine zweite Ausgleichskammer (32) der zweiten Kupplung (E2), die dem zweiten Hohlraum (52) zugeordnet ist, wobei die erste Ausgleichskammer (31) über mindestens einen Ölversorgungskanal (54b), der durch den zylindrischen Abschnitt (55) und den Flansch (53) verläuft, mit Kühlfluid versorgt wird.

11. Nasse Doppelkupplung (1) nach dem vorangehenden Anspruch, wobei die Ölversorgungskanäle (54a, 54b, 54c) des ersten Hohlraums (51), des zweiten Hohlraums (52) und der ersten Ausgleichskammer (31) winkelmäßig um die Drehachse (X) verteilt sind und radial durch den Flansch (53) verlaufen.

12. Nasse Doppelkupplung (1) nach einem der Ansprüche 10 oder 11, wobei die Ölversorgungskanäle (54a, 54b, 54c) für den ersten Hohlraum (51), den zweiten Hohlraum (52) und die erste Ausgleichskammer (31) in einer gleichen Ebene (P) senkrecht zur Achse (X), die durch den Flansch (53) verläuft, angeordnet sind.

13. Nasse Dreifachkupplung (60), umfassend eine nasse Doppelkupplung (1) nach einem der Ansprüche 1 oder 2 und eine Drehmomentabschaltkupplung (K0), die radial jenseits der nassen Doppelkupplung (1) angeordnet ist, wobei die zentrale Nabe (50) der nassen Doppelkupplung mindestens einen Ölversorgungskanal (54d) aufweist, der innerhalb der Drehmomentabschaltkupplung (K0) mündet, wobei er durch den zylindrischen Abschnitt (55) und den Flansch (53) verläuft, und wobei die Antriebsabdeckung (80), die am Umfang des Flanschs (53) der zentralen Nabe (50) angebracht ist, das radiale Ende des mindestens einen Ölversorgungskanals (54d) zur Versorgung der Drehmomentabschaltkupplung (K0) verschließt.

14. Nasse Dreifachkupplung (60) nach dem vorangehenden Anspruch, wobei der mindesten eine Ölversorgungskanal (54c), der einer Steuerkammer der ersten Kupplung (E1) Öl zuführt, durch einen zusätzlichen Verschlussstopfen, beispielsweise eine Kugel, einen Niet oder eine Schraube, verschlossen ist.

## Claims

1. Double wet clutch (1) for a torque transmission system, comprising:
a first clutch (E1) and a second clutch (E2) respectively of multidisc type, which are controlled to selectively couple a combustion engine and a rotating electric machine to a first driven shaft and to a second driven shaft, the first and second clutches (E1, E2) being arranged radially one above the other about an axis of rotation (X),
the two clutches (E1, E2) comprising a torque-input disc carrier (10, 20) coupled kinematically to the combustion engine, and a central oil supply hub (50) for the first clutch (E1) and the second clutch (E2),
said central hub (50) comprising:
- a cylindrical portion (55),
- a flange (53) extending radially from the cylindrical portion (55),
- at least one oil supply duct (54a, 54b, 54c) traversing the cylindrical portion (55) and the flange (53), and opening out within one of the first and second clutches, **characterized in that** the double wet clutch comprises a drive cover (80) coupled kinematically to the rotating electric machine, the drive cover (80) being attached to the periphery of the flange (53) of the central hub (50) so as to plug the radial end of the at least one oil supply duct,
and **in that** the drive cover (80) is force-fitted onto the flange (53) of the central hub (50).

2. Double wet clutch (1) according to Claim 1, in which the central hub (50)comprises a first annular cavity (51) arranged on the side of the flange (53) and designed to receive an actuating piston (15) of the first clutch (E1), and a second annular cavity (52) designed to receive an actuating piston (25) of the second clutch (E2), said at least one oil supply duct (54a, 54b, 54c) opening into one of the annular cavities (51, 52) of the clutches.

3. Double wet clutch (1) according to Claim 2, in which the drive cover (80) comprises an inner cylindrical bearing surface (81) for bearing an actuating piston seal (15) of the first clutch (E1), the cylindrical bearing surface (81) forming in part the first annular cavity (51) .

4. Double wet clutch (1) according to one of Claims 1 to 3, in which the drive cover (80) comprises an external toothing coupled kinematically to the rotating electric machine.

5. Double wet clutch (1) according to one of Claims 1 to 4, in which the drive cover (80) and the torque-input disc carrier (10) of the first clutch (E1) are coupled securely in rotation, for example by way of a welded connection.

6. Double wet clutch (1) according to one of Claims 2 to 5, in which the first cavity (51) and the second cavity (52) are nested radially one above the other.

7. Double wet clutch (1) according to the preceding claim, in which the multidisc assembly of the second clutch (E2) is arranged radially between the first cavity (51) and the second cavity (52).

8. Double wet clutch (1) according to one of Claims 2 to 7, in which the free end of the actuating piston (25) of the second clutch (E2) bearing on the multidisc assembly is arranged radially between the first cavity (51) and the second cavity (52).

9. Double wet clutch (1) according to one of Claims 2 to 8, in which the first cavity (51) and the second cavity (52) are oriented in the direction of the driving shaft.

10. Double wet clutch (1) according to one of Claims 2 to 9, comprising a first balancing chamber (31) of the first clutch (E1) that is associated with the first cavity (51), and a second balancing chamber (32) of the second clutch (E2) that is associated with the second cavity (52), the first balancing chamber (31) being supplied with cooling fluid through at least one oil supply duct (54b) traversing the cylindrical portion (55) and the flange (53).

11. Double wet clutch (1) according to the preceding claim, in which the oil supply ducts (54a, 54b, 54c) of the first cavity (51), of the second cavity (52) and of the first balancing chamber (31) are angularly distributed about the axis of rotation (X) and radially traverse the flange (53).

12. Double wet clutch (1) according to either of Claims 10 and 11, in which the oil supply ducts (54a, 54b, 54c) for the first cavity (51), the second cavity (52) and the first balancing chamber (31) can be arranged along a common plane (P), perpendicular to the axis (X), passing through the flange (53).

13. Triple wet clutch (60) comprising a double wet clutch (1) according to one of claims 1 or 2 and a torque disconnect clutch (K0) arranged radially beyond the double wet clutch (1), the central hub (50) of the double wet clutch comprises at least one oil supply duct (54d) opening into the torque disconnect clutch (K0) by passing through the cylindrical portion (55) and the flange (53), and the drive cover (80) attached to the periphery of the flange (53) of the central hub (50) plugs the radial end of the at least one oil supply duct (54d) supplying the torque disconnect clutch (K0).

14. A triple wet clutch (60) according to the preceding claim wherein the at least one oil supply duct (54c) supplying oil to a control chamber of the first clutch (E1) is plugged by an additional closure plug, for example a ball, rivet or screw.
